# EUROPEAN PATENT APPLICATION

(11) **EP 0 805 101 A1**
(43) Date of publication of application: **05.11.1997**
(21) Application number: 96302995.4
(22) Date of filing: 29.04.1996
(51) Int. Cl.: B62K 21/20

(54) **Shock absorbing assembly for a bicycle**

(71) Applicant: SPINNER INDUSTRY CO. LTD., Waipu Hsiang, Taichung Hsien (TW)
(72) Inventor: Chen, Hui-Hsiung, Taichung Hsien (TW)
(74) Representative: Hale, Peter

(57) **Abstract**

A shock absorbing assembly for a bicycle includes a steerer tube (12) having two first holes (121) defined diametrically therein and a ring element (22) fixedly connected to an inner peripheral surface thereof, at least one absorbing block (24) is disposed on an under side of the ring element by extending a bolt (21) therethrough and engaging a nut (25) bearing on a washer (231), a crown portion (11) has an inner tube (30) with one end thereof attached to the crown portion and the other end of the inner tube contacting the washer. The crown portion has two slots (110) defined diametrically therein. Two mediate elements (60), each have a base (62) and an extension portion (63) with a second passage (61) defined through the base and the extension portion for a pin (50) extending through the second passage. One end of the pin is movably received in the adjacent slot. The base is disposed between the crown portion and the steerer tube and the extension portion is inserted into the adjacent first hole. When a shock is transferred from the crown portion, the crown portion moves toward the steerer tube by deforming the absorbing block with the inner tube pushing the washer.

## Description

The present invention relates to a shock absorbing assembly for a bicycle and is disposed in a steerer tube and a crown portion of the bicycle.

A shock absorbing assembly disposed in a position corresponding to the front wheel of a bicycle is disclosed respectively in U.S. Patent 2,687,898 to F. W. Schwinn and U.S. Patent 3,241,858 to T. I. Duffy. Each one of the two prior inventions has a part of structure of the shock absorbing assembly disposed outside of the bicycle head tube, i.e., a part of the structure is exposed to dust, rain, etc.. Such an arrangement has a complicated structure and requires a large number of parts, both of which result in a high cost and the part disposed outside of the head tube tends to be rusted or damaged by an impact. Furthermore, such arrangement is not visually attractive.

It is an object of the present invention to provide a shock absorbing assembly which is disposed in the steerer tube and the crown portion of the front fork of a bicycle.

The present invention is defined in the accompanying independent claim. Preferred features are recited in the dependent claims.

The present invention provides a shock absorbing assembly for a bicycle and includes a steerer tube having two first holes diametrically defined therein and a ring element fixedly disposed to an inner peripheral surface thereof, at least one absorbing block disposed to an under side of the ring element by extending a bolt therethrough, a washer disposed to an under end of the absorbing block and the bolt extending through the washer and threadedly engaged to a nut.

A front fork includes a crown portion and two legs extending from the crown portion, the crown portion having two slots diametrically defined therein and an inner tube having one end thereof fixedly connected to the crown portion and the other end of the inner tube contacting the washer in the steerer tube. Two mediate elements each have a base and an extension portion extending from one side of the base, a second passage defined through the base and the extension portion. Each of the mediate elements are disposed in a position between the inner tube and an inner peripheral surface of the crown portion with the extension portion extending through the first hole corresponding thereto and the base located between the crown portion and the steerer tube. The position is located corresponding to the respective slot corresponding thereto wherein the base is sized to be larger than the slot.

Two pins each extend through the slot and the second passage of the mediate element corresponding thereto, an end of each of the pins located within the slot corresponding thereto such that when a shock is transferred from the crown portion, the crown portion moved toward the steerer tube by deforming the absorbing block with the inner tube pushing the washer.

Other objects, advantages, and novel features of the invention will become more apparent from the following detailed description when taken in conjunction with the accompanying drawings.

In the drawings:
Fig. 1 is a perspective view of a front folk from which a steerer tube extends therefrom and a wheel disposed between two legs of the front folk;
Fig. 2 is an exploded view of a shock absorbing assembly in accordance with the present invention; and
Fig. 3 is a front view, partly in section, of the shock absorbing assembly in accordance with the present invention.

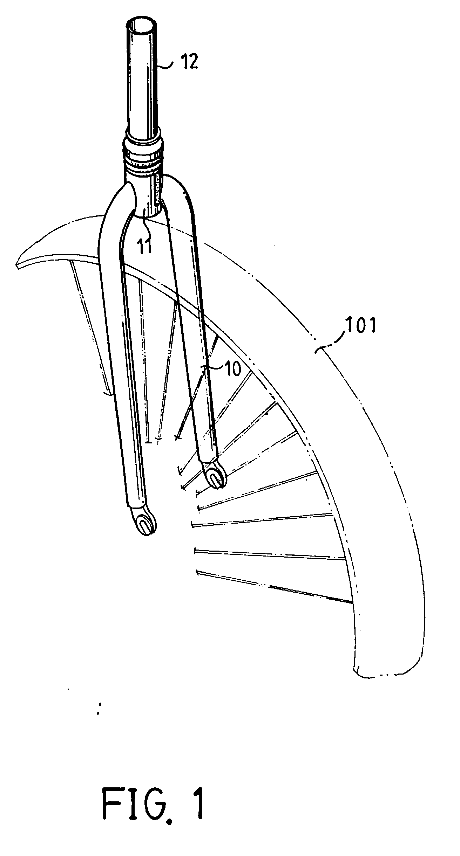

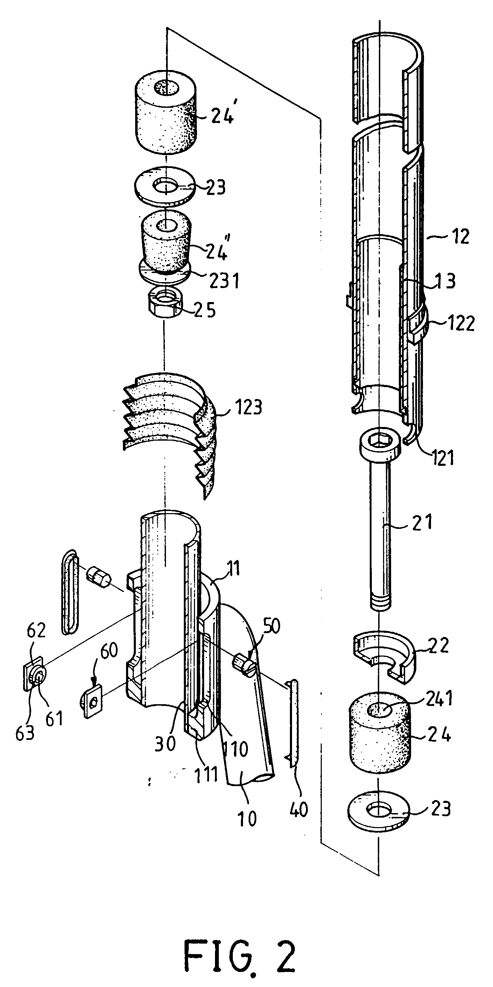

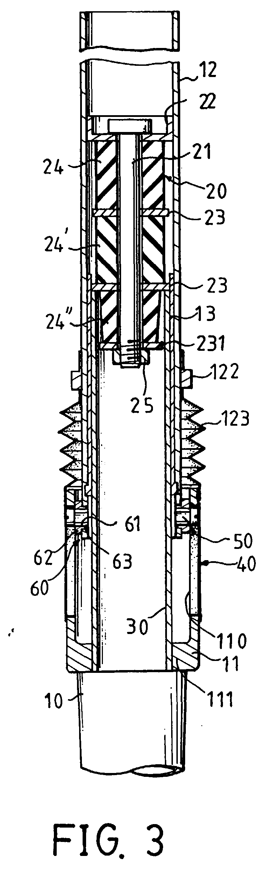

Referring to the drawings of Figs. 1 through 3, a bicycle comprising a front fork includes a crown portion 11 and two legs 10 extending therefrom, a steerer tube 12 disposed above the crown portion 11 and having one end thereof inserted into the crown portion 11. A front wheel 101 is rotatably disposed between the two legs 10. A shock absorbing assembly in accordance with the present invention is generally disposed in the steerer tube 12 and the crown portion 11. The steerer tube 12 has a first end and a second end, the first end having two first holes 121 diametrically arranged therein and a ring element 22 attached to an inner peripheral surface of the steerer tube 12.

Three absorbing blocks 24, 24', 24'' are arranged in a vertical line and a washer 23 is disposed between each two adjacent absorbing blocks 24, 24' and 24', 24''. Another washer 231 is disposed on an under side of the lowermost absorbing block 24 ''. Each of the absorbing blocks 24, 24', 24'' has a first passage 241 centrally defined therein. The uppermost absorbing block 24 has its upper end surface bearing against an under side of the ring element 22 . A bolt 21 extends through the ring element 22, the three absorbing blocks 24, 24', 24'' and the washers 23,231. A nut 25 is threadedly engaged to the bolt 21 where it exits the washer 231. The steerer tube 12 has an inner sleeve 13 fixedly connected to the inner peripheral surface thereof. A annular protrusion 122 extends radially from an outer peripheral surface of the steerer tube 12.

The crown portion 11 has two axially extending elongate slots 110 diametrically arranged therein. A flange 111 extends radially inwardly from a lower end of the crown portion 11. An inner tube 30 has one end fixedly connected to the flange 111 and the other end engaging the washer 23 above the washer 231, which is smaller than the washer 23, in the steerer tube 12. The inner tube 30 slidably contacts an inner peripheral surface of the inner sleeve 13.

Two mediate elements 60 each have a base 62 and an extension portion 63 extending from one side of the base 62, and a second passage 61 defined through the base 62 and the extension portion 63. Each of the mediate elements 60 is disposed in a space between the inner tube 30 and an inner peripheral surface of the crown portion 11 with the extension portion 63 extending through the first hole 121 corresponding thereto. The base 62 is located between the crown portion 11 and the steerer tube 12 inserted into the crown portion 11.
Each element 60 is aligned with its corresponding slot 110. The base 62 is sized to be larger than the slot 110 such that each of the mediate elements 60 will not drop from its corresponding slot 110.

A pin 50 extends through each slot 110 and into the second passage 61 of the corresponding mediate element 60. Each of the pins 50 has one end located within its slot 110. The other end has a polygonal configuration which is a close fit in the second passage 61 having an inner shape of the same configuration. A mask 40 is mounted in each of the slots 110 of the crown portion 11 to close the slots 110. A dust sleeve 123 has one end retained by the protrusion 122 and the other end retained by the crown portion 11.

When a shock is transferred from the front wheel 101 to the crown portion 11, the crown portion 11 together with the two legs 10 move toward the steerer tube 12 and the inner tube 30 pushing the washer 23 which contacts to the inner tube 30 such that the absorbing blocks 24, 24', 24'' are deformed to absorb the shock.

Although the invention has been explained in relation to its preferred embodiment, it is to be understood that many other possible modifications and variations can be made without departing from the scope of the invention as hereinafter claimed.

## Claims

1. A shock absorbing assembly for a bicycle, including:
a steerer tube (12) having a first end and a second end, the first end having two first holes (121) diametrically arranged therein and a ring element (22) attached to an inner peripheral surface of the steerer tube (12);
at least one absorbing block (24) which has a first passage (241) centrally defined therein, the absorbing block (24) having an upper end thereof adjacent an under side of the ring element (22) ,a bolt 21 extending through the ring element (22) and the absorbing block (24) via the first passage (241), a washer (231) arranged adjacent a lower end of the absorbing block (24), the bolt (21) extending through the washer (231) and being threadedly engaged to a nut (25);
a front fork including a crown portion (11) and two legs (10) extending from the crown portion (11), the crown portion (11) having two slots (110) diametrically arranged therein and a flange (111) extending radially inwardly from a lower end thereof, an inner tube (30) having one end thereof fixedly connected to the flange (111) and the other end of the inner tube (30) contacting the washer (231) in the steerer tube (12);
two mediate elements (60) each having a base (62) and an extension portion (63) extending from one side of the base (62), and a second passage (61) extending through the base (62) and the extension portion (63), each of the mediate elements (60) being disposed between the inner tube (30) and an inner peripheral surface of the crown portion (11) with the extension portion (63) extending through the corresponding first hole (121), the base (62) being located between the crown portion (11) and the steerer tube (12) opposite a corresponding slot (110) wherein the base (62) is sized to be larger than the slot width, and
two pins (50) each extending through the slot (110) and the second passage (61) of the corresponding mediate element (60), one end of each of the pins (50) being located within the corresponding slot (110).

2. A shock absorbing assembly as claimed in claim 1, characterised in that a mask (40) covers each of the slots (110) of the crown portion (11).

3. A shock absorbing assembly as claimed in claim 1 or 2, characterised in that the steerer tube (12) has a protrusion (122) extending radially from an outer peripheral surface thereof for retaining a dust sleeve (123) with one end thereof mounted to said protrusion (122) and the other end of said dust sleeve (123) retained by the crown portion (11).

4. A shock absorbing assembly as claimed in claim 1, 2 or 3, characterised in that the steerer tube (12) has an inner sleeve (13) fixedly connected to the inner peripheral surface thereof and the inner tube (30) of the crown portion (11) is slidably moved on an inner peripheral surface of the inner sleeve (13).
